# EUROPEAN PATENT APPLICATION

(11) **EP 4 546 133 A1**
(43) Date of publication of application: **30.04.2025**
(21) Application number: 23205593.9
(22) Date of filing: 24.10.2023
(51) Int. Cl.: G06F 9/50, G06F 9/455, G06F 21/53

(54) **METHOD AND SYSTEM FOR EXECUTING A SAFETY-CRITICAL APPLICATION**

(71) Applicant: Elektrobit Automotive GmbH, 91058 Erlangen (DE)
(72) Inventor: Armbruster, Michael, 81739 München (DE); Petersohn, Jens, 81739 München (DE); Lampka, Kai, 81739 München (DE); von Czettritz und Neuhaus, Michel, 37073 Göttingen (DE); Müller, Rainer, 37073 Göttingen (DE)
(74) Representative: Continental Corporation

(57) **Abstract**

A method of executing a safety-critical application (130) on a hardware platform (100) is proposed. The method includes executing, on the hardware platform (100), a hypervisor (115); instantiating, by the hypervisor (115), an execution environment (120); executing, in the execution environment (120), an operating system having a kernel (125, 125a); executing, in the execution environment (120), on the operating system, the safety-critical application (130) on a privilege level that is lower than that of the kernel (125, 125a); executing, by the safety-critical application (130), a system call instruction of the kernel (125, 125a) that diverts the control flow to a first-level handler (127) in the kernel (125, 125a) with the goal of invoking, by a particular intended system call, a functionality provided by the kernel (125, 125a); further diverting, by the processor core (112a, 112b), the control flow to a second-level handler (119) in the hypervisor (115); passing, by the second-level handler (119), the intended system call to a supervisor component (150); and checking, by the supervisor component (150), operations to be performed by the intended system call against a predetermined ruleset, so as to allow or disallow the system call.

## Description

### Technical Field

The present invention, generally, relates to the field of safety-critical applications. More specifically, the present invention relates to a method for executing a safety-critical application on a hardware platform comprising at least one processor core. Further, the present invention relates to a computing system configured to perform steps of such method, to one or more computer programs for instructing a computing system to perform steps of such method, and to a machine-readable data carrier and/or download product storing such one or more computer programs.

### Background

Safety-critical applications are usually defined or understood as software applications or programs whose failure or malfunction can at least in principle result in severe damage or harm, in particular damage or harm to one or more of machinery, equipment, human health, and environmental health. In other words, failure of a safety-critical application can cause an increase in the safety risk for human beings, machinery utilized, and/or environment involved.

Safety-critical applications can, for example, be run or executed on so-called safety-critical systems, which can include computing systems running one or more software-based safety-critical applications, as well as more complex systems involving additional components, such as one or more sensors, one or more actuators, and/or other hardware components. Exemplary safety-critical systems and corresponding applications for controlling and/or monitoring one or more components can be found in vehicles, power plant control systems, manufacturing or production control systems, chemical plant control systems, building or facility control systems, and many others.

The software used for making dedicated features of a processor of a hardware platform or computing system accessible is commonly encapsulated in a special program known as operating system kernel (also referred to as OS kernel or kernel herein). Generally, the kernel, OS kernel, and/or system kernel referred to herein may be regarded as supervisor program, which may have elevated privilege level when compared to other software components, programs or software executed on top of the kernel. The correctness of the hardware features one uses can require that the operating system kernel operates on the hardware in a correct way. Hence, correct functioning of a safety-critical application may rely or depend on correct functioning of the operating system kernel software. Also, this dependency may not only involve the software unit or kernel software, which operates the hardware feature under consideration, but may rather involve all software code, which may potentially impact the software unit under consideration, for example the entire OS kernel. With support of a single safety-related function that shall be ensured by executing a safety-critical application, this yields the common understanding that an operating system kernel in its entirety should be qualified for being used in a safety context or should be monitored.

Various standards and recommendations have been defined for safety-critical applications and systems to ensure the correct or proper functioning thereof. Usually, such standards or recommendations relate to particular use cases, and/or equipment involved. For example, ISO standard 26262 recommended by the International Organization for Standardization, ISO, relates to safety-critical or safety-related systems that include electrical and/or electronic systems and that are installed in passenger cars or road vehicles. Therein, the standards and recommendations provide a set of guidelines and/or safety measures, which should be fulfilled by a safety-critical application and corresponding system to ensure correct functioning thereof. A safety-critical application or system complying with the standard or recommendation can also be referred to as safety-qualified application or system. Software applications or computing systems not complying with such standard, for example because they handle processes or functions that are not safety critical or relevant, on the other hand, can be referred to herein as non-safety-critical applications.

For open-source software with a distributed and unspecified software development model, safety qualification is challenging and costly. However, when it comes to an open-source monolithic operating system kernel like the Linux kernel, which consists of millions of lines of code, qualification in the sense of the ISO 26262 standard, for example, can become practically infeasible, as safety qualification would typically require the whole software stack to be compliant with the requirements for the same integrity level or safety integrity level (SIL) as the safety-critical application. The term safety-integrity level or integrity level, which is also referred to herein as "safety level", may be defined as the discrete level of risk-reduction provided by a safety instrumented function or safety-critical application. So far, there is no approach or technical solution available, that shows compliance of the Linux kernel, a Linux-based kernel, or similar non-proprietary kernel software with its modules to any safety integrity level.

In many software applications and corresponding computing systems or environments, safety-critical applications can also be run or executed in parallel, sequentially, or alternately with non-safety-critical applications, or more generally can coexist with applications not fulfilling the safety level of the safety-critical applications. Alternatively, or additionally, safety-critical applications may be executed on top of a non-safety qualified OS or OS kernel. Such systems are usually referred to as mixed-criticality systems or mixed-criticality software systems. Mixed-criticality systems can be complex software-based systems, where software applications or software components of different criticality, including software of the OS, such as an OS kernel, can run on common hardware, for example one or more common processors, and the different applications are from different quality classes or safety levels, including at least one safety-critical application. This means not all of the applications in a mixed-criticality system are in adherence with the quality assurance measures as requested or recommended by standards like the ISO 26262 and with respect to the highest safety level any of the applications should comply with.

To ensure correct functioning of one or more safety-critical applications in such systems of mixed-criticality, freedom from interference between the software components differing in the quality and/or safety level associated with them should be ensured. Freedom from interference is commonly achieved by guaranteeing freedom from fault-propagation across software components of different safety levels with respect to time and space (and/or data).

For example, in order to use a non-safety-related operating system kernel for the execution of safety-related applications, mitigation mechanisms should be implemented, for example to an execution environment, in particular a non-privileged execution environment, and/or at system level to a corresponding hardware platform or computing system, such as e.g., an electric/electronic/programmable electronic system or device (E/E/PE system or device). Exemplary mitigation strategies and/or corresponding mechanisms are (a) diversified encoded processing or (b) self-checking pairs. Both approaches execute program code twice and do have a comparator that does accept the output once it is identical, e.g., per bit or to a pre-defined degree. While (a) typically duplicates the program code which is then executed on the same operating-system, (b) duplicates the electronic control-unit with its software stack and, if required due to technical analysis, even parts of its build-toolchain.

The aforementioned solutions can be accompanied with further constraints and needs. For example, coded processing often comes with restrictions to the code and with the need for specific compilers. An argumentation on independence of the elements building a self-checking pair might be difficult, e.g., if no diverse compilers for the embedded device can be found or used. In general, both approaches may require avoiding common cause failures.

### Summary

It may, therefore, be desirable to provide for an improved method and computing system of executing a safety-critical application, which overcomes or at least mitigates the aforementioned drawbacks of conventional systems.

This is achieved by the subject matter of the independent claims, wherein further embodiments are included in the dependent claims and in the following description.

Aspects of the present disclosure relate to a method for executing a safety-critical application on a hardware platform, to a computing system configured to perform steps of such method, to one or more computer programs for instructing a computing system to perform steps of such method, and to a machine-readable data carrier, and/or download product storing such one or more computer programs. It is emphasized that any feature, function, element, and advantage described herein with reference to one aspect of the present disclosure, equally applies to any other aspect of the present disclosure described herein.

According to an aspect of the present disclosure, there is provided a method for executing a safety-critical application on a hardware platform, the hardware platform comprising at least one processor and/or processor core. The method comprises the steps of:
- executing, on the hardware platform, a hypervisor;
- instantiating, by the hypervisor, an execution environment;
- executing, in the execution environment, an operating system having a kernel;
- executing, in the execution environment, on the operating system, the safety-critical application on a privilege level that is lower than that of the kernel;
- executing, by the safety-critical application, a system call instruction of the kernel that diverts the control flow to a first-level handler in the kernel with the goal of invoking, by a particular intended system call, a functionality provided by the kernel;
- further diverting, by the at least one processor core and/or processor, the control flow to a second-level handler in the hypervisor;
- passing, by the second-level handler, the intended system call to a supervisor component;
- checking, by the supervisor component, operations to be performed by the intended system call against a predetermined ruleset; and
- based on the outcome of this checking, causing, by the supervisor component, execution of the functionality as per the intended system call, or suppressing such execution.

The features and steps of the aforementioned method synergistically interact to provide comprehensive mitigation means for ensuring freedom from fault-propagation for safety-critical systems, such as the hardware platform and/or computing system described herein, based on checking operations and/or actions associated with an intended system call also referred to herein as syscall, which invokes the kernel and thus could potentially lead to corruption of the safety-critical application.

In particular, the computer-implemented method and computing system described herein can provide a mitigation measure for system calls, which can ensure freedom from fault-propagation from any guest operating system ("OS"), kernel software or part thereof, OS kernel, and/or any other non-safety-qualified process to the safety-critical application. Also, the present method and system can overcome the limitations associated with conventional mitigation measures that are based on redundancy and/or resource-duplication, as mentioned under items (a) and (b) in the background section.

Overall, the method and computing system described herein can ensure or allow for safe execution of the safety-critical application on the hardware platform, e.g., on top of any guest OS, for example including any guest OS kernel, kernel software or kernel component, and optionally including one or more non-safety-critical applications. In other words, the features and steps of the aforementioned method can synergistically interact to ensure freedom from interference (FFI) of the safety-critical application in terms of one or both space and time. In particular, the method of the present disclosure can allow for safe execution of the safety-critical application without necessarily requiring the software components of the OS, such as the entire OS kernel, to be safety-qualified. In turn, this can allow for safe execution of the safety-critical application on various different hardware platforms, with hardware and software components that may not be safety qualified.

It Is emphasized that the method and computing system according to the present disclosure can be used to advantage on safety-qualified systems and/or in mixed criticality systems. Hence, the present disclosure is not limited in this respect. Also, the present invention can be used to advantage in conjunction with any kernel, including safety-qualified and non-safety-qualified kernels, such as e.g., a Linux-based kernel.

The term "application" as used herein can refer to or be a software application or program. The term "application" as used herein is not necessarily limited to pure software applications, but can include software-based applications, which may optionally include one or more interfaces for receiving sensor signals from one or more sensors and/or for transmitting one or more control signals, interchangeably used herein with actuation signal, to one or more actuators, and/or other hardware components.

To improve readability without loss of generality, detailed specific technical implementations may be described herein. In particular, the present disclosure refers to an operating system architecture with a kernel. As noted above, however, the kernel, OS kernel, and/or system kernel referred to herein may be regarded as supervisor program, which may have elevated privilege level compared to other software components, programs or software executed on top of the kernel. Accordingly, for those skilled in the art, it is understood that the general concept described herein can be applied to various architectures as long as exception levels and/or privilege levels mentioned in the present disclosure can be utilized.

As mentioned above, the term "safety-critical application" is typically understood as software(-based) application or program whose failure or malfunction can at least in principle result in damage or harm, in particular damage or harm to one or more of machinery, equipment, human health, and environmental health. Safety-related applications or systems, on the other hand, may be defined or understood as comprising aspects not under the control of the respective safety-critical application or system, such as personnel operating the application or system. As the present disclosure focuses on aspects related to the software-based safety-critical application and/or the corresponding computing system, the terms safety-critical and safety-related application or system can be interchangeably or synonymously used herein. In other words, in the context of the present disclosure, the term safety-critical can include or refer to safety-related, and vice versa.

The present disclosure may refer in various instances to a processor, which may typically be realized as single-core or multi-core Central Processing Unit (CPU) having one or more cores or processor cores, which may be used to run an operating system. The present disclosure, however, is not limited in this respect, but can also e.g., be applied to multi-processor hardware that shares a memory. Accordingly, the terms processor, processor core and core can be used synonymously herein.

The hardware platform, as used herein, can refer to or include a data processing platform or processing circuitry, which may include or refer to e.g., a CPU with one or more processor cores for data processing, or which may refer to a multi-processor architecture. Any reference to a single processor or processor core can include reference to multiple processors or processor cores. Also, the present disclosure is not limited to a particular processor architecture, but rather can be applied to any type or architecture of processors, such as ARM, x86, RISC and others, including multi-processor architectures that share memory.

The hardware platform can include optional components and/or provide optional hardware resources for data processing, such as a physical memory, e.g., Random Access Memory, cache memory, and/or other components. The hardware platform may be implemented in and/or may be part of the computing system described herein. Hence, the terms hardware platform and computing system may be interchangeably or synonymously used herein.

An execution environment may refer to or include a computing environment with an associated configuration and/or specification in terms of hard- and/or software resources, which can be configured for performing one or more computational tasks or functions. Therein, different execution environments can at least in part be isolated or separated from one another in terms of (virtual and/or physical) hardware and their software components. Optionally, different execution environments may be communicatively and/or operatively coupled to one another and/or to other software components in a computing system, for example based on corresponding interfaces implemented in software and/or hardware. Further optionally, different execution environments can share one or more computing resources, which is also referred to herein as resources and which can include physical and/or virtual hardware resources as well as software resources.

In an exemplary and non-limiting implementation, one or more execution environments can be realized in a virtual computing environment providing one or more virtual machines for the one or more execution environments. Accordingly, different execution environments can be provided in the same virtual machine or in different virtual machines, each providing a particular execution environment.

The execution environment, in the operating system (also referred to herein as "OS" or guest OS) is executed, can be realized, or implemented as virtual machine or directly, i.e., without virtualization, on the hardware platform. Optionally, the hardware platform may comprise a plurality of execution environments, wherein one or more of these execution environments can optionally be implemented as virtual machine.

The safety-critical application may be executed on the OS and/or OS kernel. Accordingly, a privilege level of the safety-critical application is lower than that of the kernel. As commonly understood, different privilege levels may define different sets of permissions or actions allowed to be performed by the respective component, wherein a higher privilege level includes more permissions when compared to a lower privilege level. With the kernel having a higher privilege level than the safety-critical application, the kernel can be invoked by the safety-critical application with a system call and take over control of the control flow, for example to provide one or more functionalities and/or resources requested by the safety-critical application via the system call.

The hypervisor may be executed on the hardware platform, which may refer to or include running and/or configuring the hypervisor on the at least one processor core of the hardware platform and optional further components or hardware resources thereof. Alternatively, or additionally, executing the hypervisor may include activating the hypervisor on the at least one processor core of the hardware platform.

For example, due to events caused by an explicit HVC-instruction but also by execution of an exception, interrupt or similar, the control flow may be forwarded and/or diverted from the OS and/or kernel to the hypervisor.

The hypervisor may generally refer to or denote a monitoring and/or control software component allowing to forward and/or pass an intended system call to the supervisor component. Optionally, the hypervisor may be configured to execute, provide and/or instantiate the execution environment, in which the OS and the safety-critical application are executed or running.

In an example, the hypervisor may have a higher privilege level than one or more of the execution environment, the OS, the kernel and/or the safety-critical application. The hypervisor may be configured to instantiate the execution environment, in which the OS and safety-critical application can be executed. Accordingly, the hypervisor may be configured to create the execution environment, for example according to one or more predefined specifications for the execution environment, and/or a corresponding virtual machine. Optionally, an instance of a virtual machine may be created by the hypervisor, wherein the OS and safety-critical application may be executed in the virtual machine. Instantiating and/or executing the execution environment, and optionally a virtual machine, can include providing one or more resources or computing resources to the execution environment, such as physical hardware resources, virtual hardware resources and/or software resources. Optionally when a virtual machine is created by the hypervisor, instantiating the execution environment may include mapping one or more physical hardware resources of the hardware platform, for example the at least one processor core and/or further resources, such as a physical memory of the hardware platform, to one or more virtual hardware resources for the virtual machine.

The supervisor component may generally refer to or denote a supervisory software or monitoring component configured to monitor the execution environment, and/or execution of the safety-critical application in the execution environment. In other words, the term supervisor component may refer to a software component, which may implement error-detection and/or error-indication. While this definition may correspond to an established understanding in safety engineering, it may deviate from the understanding on the term supervisor software in context of operating systems as a component or program to control or schedule processes and other programs.

The supervisor component may be configured to monitor, determine and/or confirm safe execution of the safety-critical application, inter alia based on processing information or data related to execution of system calls by the safety-critical application. Such information or data may be retrieved and/or received by the supervisor component from one or more of the hypervisor, the execution environment, and the safety-critical application, e.g., via a system call's parameter.

It should be noted that also the supervisor component can be executed in the same execution environment as the safety-critical application or can be executed in a dedicated execution environment differing from the execution environment of the safety-critical application. For instance, the supervisor component may be executed in a separate virtual machine than the safety-critical application. Further, the supervisor component can be implemented as stand-alone software component, and/or can be an integral part of the hypervisor.

The term "system call instruction" may generally refer to an instruction for an action to be performed and/or a function to be provided by the kernel, which may result in control flow diversion and privilege transition between software components of different privilege level, for example in relation to, in association with, and/or in conjunction with a system call, also referred to as syscall. For instance, one or more resources of the hardware platform and/or data can be requested by the safety-critical application in the course of its execution, and one or more corresponding system calls can be raised by the safety-critical application, requesting the kernel to provide the one or more resources, and/or data. Exemplary and non-limiting system calls can read data from user-space, write data to user-space, modify a process of one or more applications, add a process or application, remove a process or application, call or execute one or more other processes or applications, and combinations thereof.

In order to actually provide the requested functionality, a context switch, or more generally a mode transition from the safety-critical application to the kernel and/or OS, and back to the safety-critical application usually occurs. A context switch, generally, refers to the process of storing at least a part of the state of a process, program, thread and/or application, so that it can be restored and resume execution at a later point in time.

By raising the system call and/or system call instruction, and for example triggering a context switch, the control flow of the processor (synonymously used herein with processor core) is diverted or passed to the first-level handler of the kernel. The control flow generally denotes the control flow of the one or more processors or hardware platform, which may refer to the order in which individual statements, instructions, and function calls, including system calls, of one or more software components or applications are executed, e.g., logically, and/or evaluated by the at least one processor and/or processor core of the hardware platform.

Further, a handler, as used herein, may refer to a software component including a routine, which may be specifically associated with one or more predefined actions and/or events associated with and/or related to the transition of the control flow, and which may be configured to trigger a predefined response or action in response to one or more actions and/or events occurring. Accordingly, a handler can dictate a particular response or subsequent action or step to be triggered, once one or more actions and/or events occur in the course of a context switch and/or mode transition, e.g., when a system call is raised by the kernel.

The first-level handler can be a kernel-specific handler for the requested one or more resources and/or functionalities, as requested by the safety-critical application via the system call. Since raising a system call and/or corresponding context switch could potentially lead to a corrupted state of the safety-critical application, the control flow of the processor and/or processor core is further diverted to the second-level handler in the hypervisor, which then enables one and/or allows to pass, forward and/or direct the intended system call to the supervisor component in order to perform the checking against the predetermined ruleset. Optionally, the supervisor component may have another handler which may check, e.g., whether a system call is whitelisted or not.

The predetermined ruleset can include one or more rules for one or more system calls. The predetermined ruleset can define and/or be descriptive of one or more system calls, one or more system call instructions and/or one or more functionalities requested via one or more system calls, and their relevancy for an integrity of the safety-critical application. Alternatively, or additionally, the predetermined ruleset can define and/or be indicative of one or more modifications to one or more resources when executing the system call, and their relevancy for an integrity of the safety-critical application.

Depending on the relevancy and/or potential to lead to a corrupted state of the safety-critical application, the supervisor component allows execution of the functionality as per the intended system call, for example can allow execution of the system call or at least part thereof, or alternatively can suppress or prevent such execution. Therein, checking the operations to be performed by the system call may mean or include analyzing one or more operations, actions, functions, and/or modifications associated with the system call, for example in terms of their potential impact on, and/or interference with the safety-critical application, and/or its execution. Optionally, parameters of the system call may be altered, or the behavior of the system call may be changed otherwise.

The overall mechanism of the method described herein can allow to comprehensively analyze any system call raised by the safety-critical application and e.g., involving a context switch to the kernel's context. In turn, this can allow to utilize any type of kernel for the OS, on top of which the safety-critical application is executed, in particular safety-qualified kernels and non-safety-qualified kernels, such as e.g., Linux-based kernels.

According to an embodiment, the further diverting of the control flow to the second-level handler in the hypervisor comprises configuring, and/or instructing the processor, and/or one or more cores, upon an attempt to execute the first-level handler in the kernel, to divert the control flow to the second-level handler in the hypervisor. By such configuration, it can be ensured that the supervisor component can be invoked by passing the intended system call to the supervisor component for its analysis and/or checking against the predetermined ruleset.

Such configuring, and/or instructing of the processor, and/or processor core to divert the control flow can be based on or can be implemented based on various possible mechanisms. Examples of such mechanisms are exceptions or traps triggered upon access to the first-level handler, and/or access violation to a resource, e.g., memory or memory pages, storing the first-level handler. Alternatively, or additionally, dedicated calls or hypervisor calls by the hypervisor can be used to divert the control flow to the second-level handler.

For example, one or more traps may be configured on the processor to divert the control flow to the second-level handler in the hypervisor. In other words, trapping, also referred to as hardware-rooted or hardware-assisted trapping, of the at least one processor and/or processor core may be used to trap and/or divert the control flow into the hypervisor, and/or to the supervisor component. Alternatively, or additionally, one or more traps for diverting the control flow may be configured on the safety-critical application. Generally, a trap may be considered as a condition or criterion, which when fulfilled triggers an exception, which may be detected to take further action. In other words, a trap and/or corresponding exception can cause diverting the control flow into the hypervisor and/or the second-level handler. Hence, trapping can provide a reliable tool for reliably detecting a context switch and/or mode transition between the safety-critical application and the guest OS.

Optionally, the trapping and/or diverting of the control flow may include trigger, and/or be accompanied with executing an exit of the execution environment, for example a virtual machine providing the execution environment, which can be detected by the hypervisor, for example based on a corresponding exit signal or status code of the execution environment. The exit of the execution environment, the corresponding exception and/or trap can allow to invoke the associated functions of the hypervisor, and/or the respective second-level handler.

The trapping and/or diverting of the control flow can, in an exemplary implementation, be provoked, caused, and/or triggered by applying appropriate settings and/or permission settings on memory access, such as e.g. by applying appropriate settings in a page table tree, for example a stage-2 page table tree (PTT), and/or the last page of a multipage PTT, which may optionally be maintained by the hypervisor and/or the supervisor component for the execution environment running the safety-critical application. Alternatively, or additionally, traps could be produced at least in part programmatically, for instance by Hypervisor Calls (HVC), dedicated instructions to invoke a more privileged mode, and/or whenever the kernel or other software, e.g., a guest OS, some process in user-space (e.g., executing a system call), tries to re-write content of specific core registers of the processor, and/or memory pages (virtual and/or physical memory pages) that should be protected. An example of such memory pages are other stage-2 memory management unit protected (MMU protected) pages of memory.

According to an embodiment, the method comprises modifying a stage-2 page table tree, PTT, maintained by the hypervisor and/or supervisor component for the execution environment of the safety-critical application. In other words, one or more modes of access may be altered and/or modified in a stage-2 PTT maintained outside the execution environment, for example maintained by the supervisor component, and/or the hypervisor executed on the at least one processor, and/or processor core. Modifying and/or altering access to one or more page tables, and/or page table trees can, for example, involve applying appropriate settings in one or more page tables, one or more stages of a page table tree, and/or one or more PTTs. This can ensure proper isolation of hardware resources and freedom from interference.

Generally, a page table refers to a data structure used by a virtual memory system in a computer operating system to store the mapping between virtual memory addresses and a physical memory of the hardware platform, for example in the form of one or more page table entries in the page table and/or a page table tree. Optionally, page tables can hold, and/or be associated with permission settings on memory access, and/or other settings. Page tables can further be arranged or structured as multilevel or multistage page table trees in hierarchical manner, for instance comprising at least a stage-1 page table tree (also referred to as level-1 page table), PTT, and a stage-2 PTT (also referred to as level-2 page table). In multilevel page tables, page table entries of the level-1 page table can be pointers to a level-2 page table (tree) and entries of the level-2 page table (trees) can be pointers to a level-3 page table (tree) and so on. The entries of the last level page table (tree) store actual frame information of the memory, and the level-1 page table (tree) typically contains a single-page table and the address of that table is typically stored in a Page Table Base Register, PTBR. In case of modern ARM-based processors, pointers to the PTT can be stored in Translation Table Base Registers 0 and/or 1, referred to as TTBR0 and TTBR1. As mentioned above, however, the present disclosure is not limited to a particular processor architecture.

In an exemplary embodiment, a stage-2 page table (PT) and/or page table tree may be maintained in and/or by the hypervisor for the execution environment, e.g., at least one virtual machine, and a stage-1 page table, and/or page table tree may be maintained in, and/or by the execution environment and/or at least one virtual machine. Optionally, one or more of the stage-1 and stage-2 PT and/or PTT can have one or more PTT levels.

According to an embodiment, the method further comprises marking, in a memory management of the hardware platform, a memory area, or generally memory and/or memory pages, in which the first-level handler is stored as not executable (also referred to herein as non-executable), and designating the second-level handler in the hypervisor as an exception handler for a memory exception triggered by an attempt to execute code in said memory area. Therein, the memory area may be marked, and/or designated as non-executable for the safety-critical and/or for the kernel, respectively the software component that is typically responsible for execution of the system call.

Marking the memory area as non-executable can involve or include setting a corresponding mode of access and/or access permissions restricting, disallowing and/or prohibiting execution of any code in said memory area. Other modes of access and/or access permissions can relate to or include read permission to read from the memory area and write permission to write to the memory area. Optionally to marking the memory area as non-executable, the memory area can also be marked one or more of readable, non-readable, read-only, writable, and/or non-writable.

By marking the memory area as non-executable, by raising a system call, or generally an exception, by the safety application, and by designating the second-level handler as exception handler, it can be ensured that the control flow is reliably diverted to the second-level handler of the hypervisor, which can then pass the system call to the supervisor component. Accordingly, this mechanism allows one to take over control of the control flow by the hypervisor and the supervisor component to ensure safe execution of the safety-critical application.

Alternatively, or additionally to marking the memory area as non-executable, an illegal instruction may be injected into the memory area or page, and/or the system call instruction may be marked as an illegal instruction, such that the control flow may be diverted to the hypervisor.

According to an embodiment, a predetermined set of whitelisted system calls is exempted from the diverting of the control flow to the second handler in the hypervisor, thereby causing their intended functionality to be directly executed upon the system call from the safety-critical application. This, however, does not exclude that upon execution of any system call, at least the execution or process state of the calling process, for example the safety-critical application, is stored before switching to kernel context, and optionally that it is determined whether the execution state is not corrupted when switching back to the safety-critical application, respectively its context. The terms whitelisted system calls may mean or refer to allowable system calls, for example system calls having low or no potential to lead to a corrupted state of the safety-critical application, and/or system calls merely defined as non-critical for the safety-critical application.

Whitelisting of particular system calls can, for example, include whitelisting memory pages or memory area storing first-level handlers for the respective whitelisted system calls, wherein whitelisting memory pages can include one or more of allowing read, write and execution access to these memory pages or area. Whitelisting particular, for example non-critical, system calls can generally allow to increase performance of the hardware platform and/or reduce computational resources required for executing the safety-critical application.

According to an embodiment, the first-level handler for a whitelisted system call is fully outside the memory area that is marked as not executable. Accordingly, memory area and/or memory pages storing a first-level handler for a whitelisted system call may be marked executable, to allow the whitelisted system call for execution.

It should be noted that an executable code of the first-level handler for a whitelisted system call can still be non-writable but may contain a parameter that holds a reference to one or more writable memory pages to allow the whitelisted system call to execute.

According to an embodiment, the whitelisted system call invokes functionality and/or one or more operations or actions that i) do not change and/or corrupt the process state (also referred to as execution state) of the safety-critical application, and/or ii) either do not access memory areas (also referred to as memory pages) used exclusively by the safety-critical application or only read from these memory areas. Such types of system calls bear low or no potential to lead to a corrupt state of the safety-critical application and/or system-calls defined as non-critical for the safety-critical application, and hence can be allowed, for example to increase overall performance.

According to an embodiment, the method further comprises designating a memory area and/or memory pages for common use by the safety-critical application on the one hand and the kernel on the other hand. Such memory of common use may be referred to as shared-memory and may be wanted for some implementations of safety-critical application. Such common or shared memory may not be regarded trustworthy by the safety-critical application, such that even erroneous or faulty content of the shared memory may not lead to a corrupted state of the safety-critical application. Therefore, system calls only accessing common or shared memory can be allowed or whitelisted.

According to an embodiment, the predetermined ruleset comprises at least one rule allowing one or more system calls to write to a designated memory area, memory register, and/or register. In other words, one or more system calls may be allowed for execution and writing to a designated memory area, memory register and/or register by the supervisor component based on the checking against the predetermined ruleset. Alternatively, or additionally, the predetermined ruleset comprises at least one rule forbidding and/or prohibiting one or more system calls to write to a designated memory area, memory register, and/or register. In other words, one or more system calls may be disallowed for execution and writing to a designated memory area, memory register, and/or register by the supervisor component based on the checking against the predetermined ruleset. For instance, the supervisor component may analyze an intended system call against the predetermined ruleset to determine whether the system call is whitelisted, such that write access to the designated memory area, memory register, and/or register can be allowed, or whether the respective system call is blacklisted, such that write access is to be disallowed to the designated memory area, memory register, and/or register.

According to an embodiment, the method further comprises checking and/or analyzing, by the supervisor component, after executing the functionality as per the intended system call, whether modifications performed by this functionality are in agreement with the predetermined ruleset, and in response to determining that this is not the case, determining that the safety-critical application is not working properly. For example, the supervisor component may be configured determine whether modifications made by the system call, e.g., one or more modifications in a memory area, memory pages, memory register, and/or register utilized and/or allocated to the safety-critical application, correspond to and/or comply with one or more rules defined in the predetermined ruleset, the one or more rules being indicative of allowable or expected modifications. Any modification not in agreement or not complying with the predetermined ruleset can thus be reliably detected by the supervisor component as non-allowable or unexpected modification, thereby indicating that the safety-critical application is or at least may not be working properly due to the non-allowable modification performed by or in the course of the system call.

According to an embodiment, the further diverting of the control flow to the second-level handler in the hypervisor comprises performing, by the first-level handler in the kernel, a hypervisor call, HVC. Such hypervisor calls may in exemplary implementations be utilized to reliably hand over or divert the control flow to the hypervisor. This, however, is only one possible mechanism, and other mechanism, such as trapping, can be used instead or in addition.

According to an embodiment, the causing execution of the functionality as per the intended system call comprises handing over the control flow to a handler for the intended system call in the kernel. Such handing over of the control flow can allow the kernel and/or the respective handler to execute the system call.

The handing over of the control flow can be temporary. For instance, the control flow may be temporarily handed over to the handler for the system call in the kernel, and then handed over to the hypervisor and/or supervisor component again to analyze one or more modifications made by the system call. For example, execution and/or process states of the safety-critical application may be analyzed and inter-compared before and after execution of the system call. Alternatively, the control flow can be handed over permanently to the handler of the kernel without being handed back to the hypervisor and/or supervisor component after execution of the system call.

According to an embodiment, the method further comprises granting, by the hypervisor, to the supervisor component, write access to at least one memory area and/or memory pages used by or allocated to the safety-critical application, and writing, by the supervisor component, a result of the intended system call into this at least one memory area. Granting access to the supervisor component and writing the result of the system call by the supervisor component can enable the supervisor component to comprehensively analyze one or more modifications made by the system call to ensure that the safety-critical application can safely resume its execution after executing the system call.

According to an embodiment, the method further comprises, in response to determining that the functionality as per the intended system call affects a state of the process (also referred to as process state or execution state) of the safety-critical application that is stored in the supervisor component, storing, before execution of the intended system call, this state of the process and/or safety-critical application, and checking, after execution of the intended system call, an updated state of the process and/or safety-critical application against the stored state. Based on checking the updated state or state after execution of the system call against the stored state or state before execution of the system call, the supervisor component may be configured to determine one or more modifications made by the system call to the state. The supervisor component may further be configured to determine based on the predetermined ruleset whether said one or more modifications are wanted, expected for the respective system call and/or allowable. Such allowable modifications may, for example, relate to adding and/or removing one or more memory pages to the safety-critical application. Other non-limiting examples are core-pinning or CPU pinning, which refers to the process of binding or unbinding one or more cores and/or processors to a process, respectively to the safety-critical application. If the modification is not wanted, expected or allowable, the supervisor component can determine that the safety-critical application is or at least may not be working properly.

According to an embodiment, at least one rule in the predetermined ruleset is based at least in part on whether a system call is invoked from the safety-critical application or from another application running in the same execution environment. Accordingly, the hypervisor and/or supervisor component may be configured to determine a source and/or origin of the system call, and/or to determine whether the safety-critical application or other software running in the execution environment raised the system call. The source and/or origin of a system call may for example be determined based on an identifier for the calling process. Depending on the determined source and/or origin of the system call, the supervisor component can then invoke or execute different functions, which can allow for a versatile and adaptable overall system. A differentiation or detection of the source of the system call can be of particular advantage in mixed-critical systems, where one or more other software programs may coexist with the safety-critical application in the same execution environment.

According to an embodiment, the method further comprises processing, by the safety-critical application, measurement data acquired by at least one sensor into an actuation or control signal, and actuating at least one land, air, or sea vehicle, at least one robot, and/or any component thereof, with the actuation signal. In other words, based measurement or sensor data from one or more sensors, the safety-critical application may determine the actuation signal to actuate at least one component of a land, air, or sea vehicle, and/or at least one robot, which can be any type of robotic equipment. For instance, an output of the safety-critical application may include the actuation signal, which can actuate one or more display components in a vehicle.

A further aspect of the present disclosure relates to a computing system, which comprises a hardware platform with one or more processors and/or processor cores, and a (physical and/or virtual) memory for data storage. The computing system is configured to perform steps of the method, as described hereinabove and hereinbelow. It is emphasized that any step, feature, function, and/or element described herein with reference to the method can be a feature, function, and/or element of the computing system, and vice versa.

Yet another aspect of the present disclosure relates to one or more computer programs, comprising machine-readable instructions that, when executed by a computing system, cause the computing system to perform steps of the method, as described hereinabove and hereinbelow, and/or cause the computing system to perform the role of the supervisor component and/or hypervisor in the context of the method, as described hereinabove and hereinbelow.

A further aspect of the present disclosure relates to a non-transitory machine-readable data carrier, and/or a download product with, and/or storing, one or more computer programs comprising machine-readable instructions that, when executed by a computing system, cause the computing system to perform steps of the method, as described hereinabove and hereinbelow, and/or cause the computing system to perform the role of the monitoring component in the context of the method, as described hereinabove and hereinbelow

### Brief description of the drawings

These and other aspects of the invention will be apparent from and elucidated further with reference to the embodiments described by way of examples in the following description and with reference to the accompanying drawings, in which
Fig. 1 shows a flowchart illustrating an exemplary computer-implemented method of executing a safety-critical application on a hardware platform;
Fig. 2 shows a block diagram illustrating an exemplary hardware platform and method for executing a safety-critical application;
Fig. 3 shows a block diagram illustrating an exemplary hardware platform and method for executing a safety-critical application;
Fig. 4 shows a block diagram of a supervisor component of an exemplary hardware platform and method for executing a safety-critical application; and
Fig. 5 shows a flow chart illustrating a functionality of a supervisor component of an exemplary hardware platform and method for executing a safety-critical application.

In the figures, elements which correspond to elements already described may have the same reference numerals. Examples, embodiments or optional features, whether indicated as non-limiting or not, are not to be understood as limiting the invention as claimed.

### Detailed description of exemplary embodiments

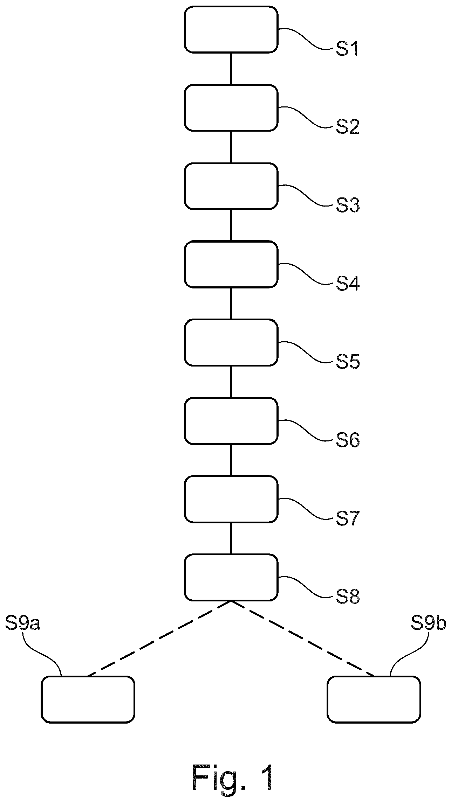

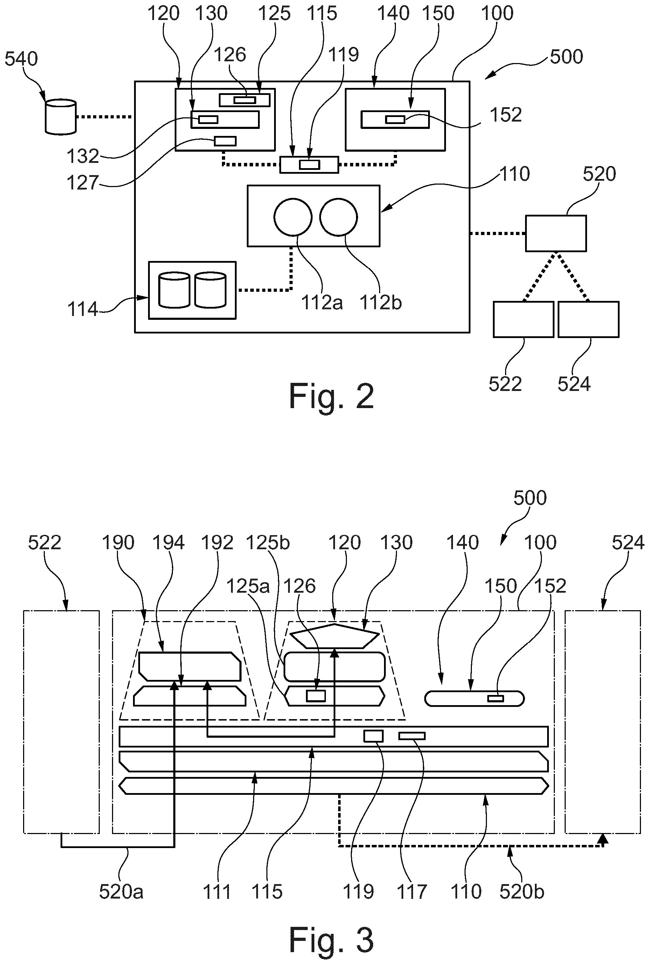

Figure 1 shows a flowchart illustrating an exemplary computer-implemented method of executing a safety-critical application on a hardware platform, for example the hardware platform 100 described with reference to Figure 2.

Figure 2 shows a block diagram illustrating an exemplary hardware platform 100, computing system 500 and method for executing a safety-critical application 130. In the following, it is mutually or commonly referred to Figures 1 and 2.

As shown in Figure 2, the hardware platform 100 includes a processing circuitry 110, which may denote a CPU 110 and/or processor 110, with two processor cores 112a, 112b. The hardware platform 100 may include a single processor 112a or more than two processor cores 112a, 112b.

The hardware platform 100 further comprises a physical data storage 114 or memory 114. The memory 114 can be any type of hardware-based memory 114, such as Random Access Memory or other type, which can be used as computing resource or resource by the processing circuitry 110.

The hardware platform 100 can be embodied as computing system 500 and/or can be part of a computing system 500, which may comprise optional other components 520, 540, such as one or more communication interfaces 520 and/or one or more other data storages 540. Via the one or more communication interfaces 520, one or more other components or entities may be communicatively and/or operatively coupled to the computing system 500, respectively, the hardware platform 100. For instance, one or more sensors 522 may be coupled to the one or more communication interfaces 520 to provide sensor signals. Alternatively, or additionally, one or more actuators 524 may be coupled to the one or more communication interfaces 520, for example to receive one or more control or actuation signals from the computing system 500 and/or hardware platform 100.

The hardware platform 100 further comprises at least one execution environment 120, in which at least one safety-critical application 130 is executed and/or running. The execution environment 120 of the safety-critical application 130 can be referred to in the following as first execution environment 120.

The first execution environment 120 may for example be embodied as virtual machine 120 of the hardware platform 100. The safety-critical application 130 may be executed on top of a guest operating system or OS 125 and/or an OS kernel 125 of the guest OS 125. Optionally, one or more further safety-critical applications 130 may be executed in the first execution environment 120 or another execution environment of the hardware platform 100. Further optionally, one or more non-safety-critical applications 127 may be executed in the first execution environment 120, for example in user-space of the OS, guest OS 125, respectively its kernel 125.

The hardware platform 100 and/or computing system 500 further includes a hypervisor 115 executed on the hardware platform 100 and configured to instantiate the execution environment 120 of the safety-critical application 130, respectively, the first execution environment 120. The hypervisor 115 may have a privilege level higher than the safety-critical application 130, the guest OS 125 and/or the kernel 125.

The hardware platform 100 further includes a further or second execution environment 140, which may be instantiated by the hypervisor 115 to execute a supervisor component 150. The second execution environment 140 may optionally be implemented as second virtual machine 140. Alternatively, the second execution environment 140 may be provided on hardware level or without virtualization. Optionally, the supervisor component 150 may be part of the hypervisor 115.

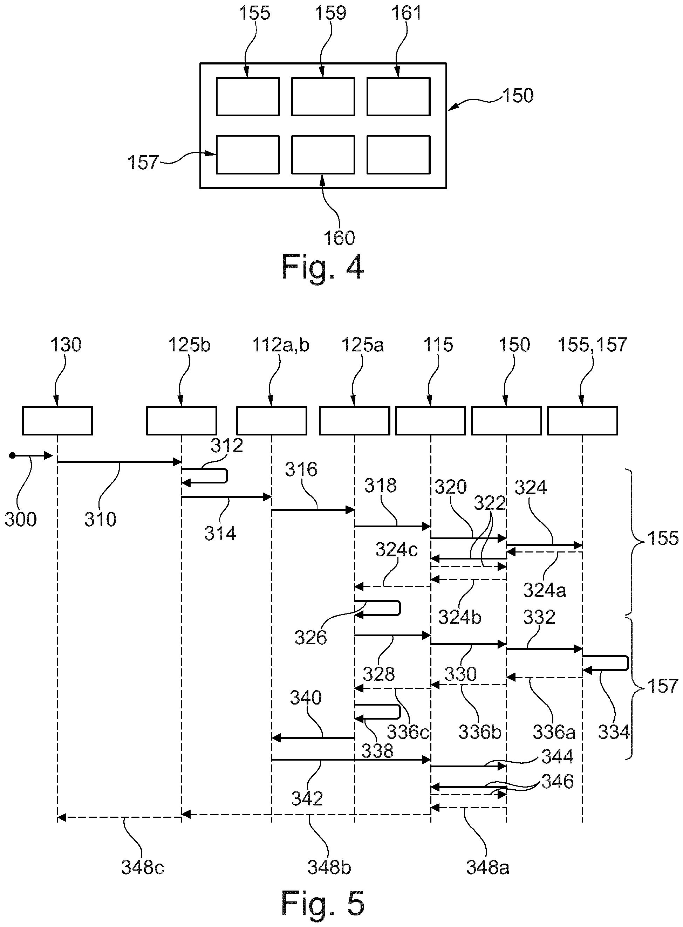

The second execution environment 140 may have its own memory and data storage and may be executed on top of a separate operating system and/or kernel. The supervisor component 150 may include one or more handlers 152 or functional blocks for performing dedicated tasks or functions, as described hereinabove and hereinbelow, and e.g., referred to as functional blocks 155, 157, 159, 160, 161 in Figures 4 and 5.

The guest OS 125 and or guest OS kernel 125 may, for example, be a Linux-based kernel. However, any other kernel software may be used for the guest OS 125. Also, more than two execution environments may be utilized. For instance, a third execution environment and/or virtual machine may be utilized for non-safety-critical applications, such as for providing a network or ethernet connection or corresponding data related thereto.

The functionalities of the hypervisor 115 in conjunction with the supervisor component 150 and the safety-critical application 130 is further illustrated in the flowchart of Figure 1, which illustrates a computer-implemented method for executing the safety-critical application 130 on the hardware platform 100.

The method shown in Figure 1 comprises, in step S1, executing the hypervisor 115 on the hardware platform 100.

The method comprises in step S2 instantiating, by the hypervisor 115, an execution environment 120, respectively the first execution environment 120, for the safety-critical application 130. This may include creating and/or configuring the first execution environment 120, for example in terms of one or more resources allocated to the first execution environment and/or in terms of the OS or OS kernel 125 for the safety-critical application 130.

The method further comprises, in step S3, executing, in the first execution environment 120, the operating system 125 and/or kernel 125.

Further, in step S4, the safety-critical application 130 is executed on the OS and/or kernel 125 with a privilege level that is lower than that of the kernel 125.

At step S5, a system call instruction and/or system call of the processor cores 112a, 112b is executed and/or raised by the safety-critical application 130, which system call triggers diverting the control flow of the processor cores 112a, 112b to a first-level handler 126 in the kernel 125 with the goal of invoking, by the particular intended system call, a functionality provided by the kernel 125.

At step S6, the control flow is further diverted by the processor 110 and/or processor cores 112a, 112b to a second-level handler 119 in the hypervisor 115. This can, for example, involve setting one or more traps on memory pages or area storing the first-level handler 126 of the kernel 125. Alternatively, or additionally, hypervisor calls may be utilized to divert the control flow to the second-level handler 119 of the hypervisor 115.

In a further step S7, the second-level handler 119 of the hypervisor 115 passes, directs and/or forwards the intended system call to the supervisor component 150.

The method further comprises a step S8 of checking and/or analyzing, by the supervisor component 150, operations to be performed by the intended system call against a predetermined ruleset.

Depending on outcome of this checking and/or analysis at step S8, the supervisor component 150 can cause and/or allow, at step S9a, execution of the functionality requested as per the intended system call.

Alternatively, based on the outcome of the checking and/or analysis at step S8, the supervisor component 150 can suppress, disallow and/or prevent, at step S9b, execution of the functionality requested as per the intended system call.

As described hereinabove and hereinbelow, the general method illustrated in Figure 1 can be supplemented with one or more optional features, steps, or aspects. Such exemplary steps and aspects, as well as advantages and benefits achieved by the method, are summarized in the following with continued reference to Figures 1 and 2, as well as with reference to Figures 3 to 5.

Therein, Figure 3 shows a block diagram illustrating an exemplary hardware platform 100 and computing system 500 for performing a method for executing a safety-critical application 130. Unless stated otherwise, the hardware platform 100 of Figure 3 comprises the same features and elements as the hardware platform 100 of Figure 2. Figure 4 shows a block diagram of a supervisor component 150 of an exemplary hardware platform 100 and method for executing a safety-critical application 130. Figure 5 shows a flow chart illustrating a functionality of a supervisor component 150 of an exemplary hardware platform 100 and method for executing a safety-critical application 130. The supervisor component 150 of Figures 4 and 5 may comprise the same features and functions as the supervisor component 150 described with reference to any of Figures 1 to 3, unless stated otherwise.

The computing system 500 depicted in Figure 3 corresponds to or illustrates the components of an electric/electronic/programmable electronic device (E/E/PE device), for example as used as safety-critical system in vehicles for controlling one or more functions of the vehicle.

The computing system 500 includes a hardware platform 100, which may be considered as control system for the E/E/PE device or computing system 500. The computing system 500 includes a processing circuitry 110 and/or hardware 110 with one or more processors 110 and/or cores 112a, 112b, and memory 114 (see Fig. 2).

Optionally, the hardware platform 500 includes a bootloader 111 for configuring the platform 100 during booting. The hardware platform 100 further includes a hypervisor 115, which for example can provide or allow to setup one or more execution environments 120, 190, 140 on the hardware platform 100.

In particular, Figure 3 illustrates a first execution environment 120 or main execution environment, which may optionally be comprised in or provided by a first or main virtual machine 120 maintained and/or instantiated by the hypervisor 115. The hypervisor 115 may have a higher privilege level than any of the execution environments 120, 140, 190 shown in Figure 3. The first execution environment 120 may comprise a guest OS or guest OS kernel 125a with one or more first-level handlers 127 being invoked when one or more system calls are executed in the first execution environment 120, for example by the safety-critical application 130. A C-Library 125b is illustrated in Figure 3, which may be utilized by the safety-critical application 130.

A second execution environment 140 may be provided for the supervisor component 150 and its one or more handlers 152, 155, 157, 159, 160, 161. The second execution environment 140 may be run as dedicated or encapsulated computing environment directly on the hardware platform 100 without virtual machine. For instance, the supervisor component 150 may be integrated into the hypervisor 115. Alternatively, the supervisor component 150 may be executed in a virtual machine that provides the second execution environment 140.

The hardware platform 100 may further comprise a third execution environment 190 with a further kernel 192 and/or guest OS 192, optionally running another process 194, such as e.g., a proxy server application.

In the example shown in Figure 3, the third execution environment 190 communicates via one or more (digital) communication interfaces 520a with the external world. For instance, one or more sensor signals can be obtained from one or more sensors 522 communicatively coupled to the one or more communication interfaces 520a. Sensor signals received via the communication interface(s) 520a can be provided to the safety-critical application 130 and/or other components of the hardware platform 100, which can for example be used to generate one or more actuation signals to actuate one or more actuators communicatively and/or operatively coupled to the hardware platform 100 via one or more corresponding communication interfaces 520b.

Optionally, the Privilege Access Never, PAN, feature may be active on the hardware platform 100, as e.g., provided by modern ARM processors, and/or the software-based counterpart (SW-PAN), which is based on emulation of the PAN feature. Optionally, hardware based privileged mode access control mechanisms, as e.g., the PAN feature on modern ARM processors or the SMAP feature on modern x86 processors, and/or a software-based equivalent, may be active on the hardware platform 100.

In the following, various features, functions, and benefits related thereto are described, primarily with reference to Figure 4, which illustrate these features or functions as block diagram with functional blocks 155, 157, 159, 160, 161, and with reference to Figure 5 which illustrates further details of and/or summarizes functional blocks 155, 157 and illustrates the call chain for blocks 155, 157. One or more of these functional blocks 155, 157, 159, 160, 161 can be inter-combined and/or combined with one or more other functions described herein with reference to the supervisor component 150. Further, each of the functional blocks 155, 157, 159, 160, 161 may be associated with or correspond to one or more handlers 152 of the supervisor component 150.

To support a wide range of system calls, a filtering-mechanism can be implemented in the form of functional block 155 in the supervisor component 150. Functional block 155 and/or the supervisor component 150 may be configured to only allow system calls and corresponding actions and/or functionalities, which have been analyzed by the supervisor component 150 and checked against the predetermined ruleset. Allowance can be given by adding a system call to a whitelist, which may include whitelisting memory area and/or memory pages for a respective first-level handler 126 of the kernel 125, 125a.

For instance, identification of a system call and/or a type of system call can be given by its hex-number. Further, a transition from within the context of the safety-critical application 130, e.g., via the C-Library 126b, and via the kernel 125, 125a to the hypervisor 115 and the supervisor component 150, can be triggered by a context-switch due to the system call.

Generally, depending on the type of system call, a particular system call may potentially lead to a corrupted state of the safety-critical application 130 or be considered non-critical. For instance, the following types of system calls may be differentiated by the hypervisor 115 and/or supervisor component 150, and/or particular checks may be performed by the hypervisor 115 and/or supervisor component 150 when a particular type of system call is intended or requested by the safety-critical application 130.
a) system calls that do only read from userspace;
b) system calls that do write to userspace;
c) system calls that modify the process state;
d) system calls that add/ remove processes;
e) system calls in context of mixed-criticality user-spaces and/or being raised by non-safety-critical applications.

In the following, these types of system calls and the corresponding functions provided by the hypervisor 115 and/or supervisor component 150 are discussed in more detail.

System calls which only read from user-space, and/or don't access the user-space, and don't change the process or execution state of the safety-critical application 130, e.g., on purpose, may be whitelisted and allowed for execution. Since the kernel 125, 125a has read access to the user-space memory, reads can be performed by the kernel 125, 125a.

System calls which write to the user-space may need further mitigation measures which are illustrated as functional blocks 155 and 157 in Figure 4, and the detailed flow chart shown in Figure 5 illustrating the respective call chain. Therein, the call chain between safety-critical application 130, C-library 125b, processor cores 112a, 112b, kernel 125a, hypervisor 115, supervisor component 150, and the corresponding functional blocks or calls of the supervisor component 155, 157 is illustrated in Figure 5. Blocks 155, 157 shown in Figures 4 and 5 can implement the following the mitigation measures. In the following, it is commonly referred to Figures 4 and 5.

When a system call 310 which writes to user-space, is dispatched at step 300, e.g., a posix call can be invoked in user-space that can be provided by e.g., the C-library 125b. The C-library 125b may be strictly a user space component which may be optionally used by an application, e.g., the safety-critical application 130. The posix call may trigger a system call, which may further be handled by the kernel 125a, the hypervisor 115 and the supervisor component 150.

The supervisor component 150 may extract the memory region, area, and/or pages from the arguments of the raised system call, to which the kernel 125a may be allowed to write. It can store and/or copy the memory region, area, and/or pages linked to this system call and the calling process, e.g., the safety-critical application 130, at step 312, and let the kernel 125a continue its operation on the specific system call at step 314.

Block 155 can be triggered via a chain of exceptions once a system call is called in user-space and/or C-library 125b. Alternatively, also specific memory can be defined and passed on to the kernel 125a, which can be configured as writeable for the kernel 125a, although the memory page(s) may be mapped to the "safety-critical application 130 with its libraries.

The user-space can store the system call parameters in the registers at step 312 and call the system call instruction (svc) at step 314, which triggers a svc exception at step 316 and the processor cores 112a, 112b switch to exception level 1, EL1, and calls the registered first-level (exception) handler 126 at step 316.

The code page of the first-level (exception) handler 126 can be marked as non-executable in the memory area of the user-space. This in turn can trigger a memory exception to the hypervisor 115 at step 318 when the system call is raised.

The hypervisor 115 can interpret the exception and forwards it to the supervisor component 150 by the respective second-level handler 119 at step 320. Herein the corresponding sub-feature such as functional block 155 can be called at step 324 and the control flow may be handed back to the kernel 125a at steps 324a, 324b, 324c, e.g., once the system call number (extracted from the register) points to a whitelisted system call, such that the system call can be executed at step 326 by the kernel 125a.

Further, the set of memory areas utilized by the kernel 125a and utilized by the safety-critical application 130 can be switched at step 322, for example based on modifying a PTT maintained by the hypervisor 115. For example, the hypervisor 115 may maintain a plurality of stage-2 PTTs, e.g., one for the context of the safety-critical application 130 and one for the context of the kernel 125a or other software. When the safety-critical application 130 is executed on the processor cores 112a, 112b, a first stage-2 PTT may be activated and when the kernel 125a or another software is executed on the processor cores 112a, 112b, a second stage-2 PTT may be activated, such that different memory pages and/or areas can be mapped and/or allocated to the safety-critical application 130 and the kernel 125a or other software.

Accordingly, block 155 can provide comprehensive preparation means to safely execute the system call. To further safely write to user-space by the system call and/or an operation associated therewith, block 157 of the supervisor component 150 may be invoked.

When the kernel 125a tries to write to the user-space during execution of the system call, the kernel 125a and/or the respective first-level handler 126 can call an HVC-instruction to the second-level handler 119 of the hypervisor 115 at step 328, e.g., with the memory range and/or area as argument. The second-level handler 119 can pass the control flow to and/or call block 157 of the supervisor component 150 at step 330.

Functional block 157 and/or the supervisor component 150 can then check memory range and/or area against the data from block 155 and if matching do the copying action in the supervisor component 150 and/or in block 157 at steps 332, 334 before returning to kernel 125a at steps 336a, 336b, 336c to finish the system call at step 338.

The supervisor component 150 can maintain the PTTs and/or memory areas for the kernel 125a and safety-critical application 130 directly, without restrictions. Access can be granted by the hypervisor 115 and integrity can be ensured by the capability and/or functionality of blocks 155, 157 and the hypervisor 115.

It should be noted that it may be possible to optimize runtime for system calls that do solely write to pages without changing the PTT. For those, specific shared memory can be used. This is different from the private memory and/or memory area used by the safety-critical application 130. We consider this shared memory as system call-memory herein, which can be mapped writeable for the kernel 125a, such that blocks 155, 157 can be simplified in such scenarios, e.g., where the kernel 125 can directly write back data to system call-memory mapped.

To finalize execution of the system call and return to the safety-critical application 130, the result of the system call can be written to the memory base register, e.g., the TTBR0 (Translation Table Base Register 0) at step 340. Writes to the memory base register can raise an exception, such as a TVM exception in case of ARM-based processors, which can hand over the control flow to the hypervisor 115 again that can invoke the respective second-level handler 119 at step 344 for changing memory pages and/or memory area at step 346, e.g., based on setting flags and/or based on modifying the stage-2 PTT and/or based on activating the stage-2 PTT for the safety-critical application. It can then be returned to the safety-critical application 130 at steps 348a, 348b, 348c to resume or continue its execution.

System calls, that modify the process or execution state of the safety-critical application 130 and/or system calls that add or remove processes can be handled by block 159 of the supervisor component 150 as follows.

When the kernel 125a wants to modify the process state, the corresponding supervision within block 159 of the supervisor component 150 can be extended. On exit, e.g., removal, of a process and/or a safety-critical application 130, all state information may be cleaned up in the supervisor component 150. This means, that all components within the supervisor component 150 that hold state or state information about a process and/or safety-critical application 130 may be notified of its deletion. The supervisor component 150 may then remove the register copies, and release memory area along with updated state information on which process and/or safety-critical application 130 is correlated to which PTT, e.g., stage-2 PTT.

On update of a process-context, such as when memory is allocated and/or released, the supervisor component 150, e.g., by means of the dedicated functional block or block 159, can check the validity of the allocation and modify the stage-2 PTTs accordingly. The validity can be ensured based on information provided by block 155, which may note the initial requested change (e.g., two extra pages) and the supervisor component 150 and/or block 159 then checks when triggered by the kernel 125a via a hvc-instruction against these requirements, as well as for collisions with existing pages in the case of new allocation, or when releasing only against matches of the information provided by block 155 of the supervisor component 150.

Certain system calls may also lead to adjustments in the state stored by the supervisor component 150, which can be implemented in a dedicated functional block 160 responsible for state supervision. The interplay in between such state supervision block 160 and block 155 is the same as the one in context of memory allocation or release described with reference to block 159. The update can e.g., be triggered via an HVC-instruction.

Since not only execve() + clone() can start processes further system call, combinations may be embedded in a further dedicated block of the supervisor component 150 that can be responsible for supervision on the creation of a safety-critical application 130. Therein, execve() may replace the memory image (specifically the program instructions) with a new specified set of program instructions usually obtained from mass storage in an existing process. Also, non-program instruction memory may be released. Further, clone() may comprise multiple functions, and is typically used to create a new process using the same program instruction memory (copy) as the calling process.

Depending on the exact system call the supervisor component 150 can distribute the different system call events to the internal components, blocks 155, 157, 159, 160 and/or handlers accordingly. Each system call in this category may have its own ordering and call needs.

System calls in context of mixed-criticality user-spaces can be handled as follows by the supervisor component 150 and/or a dedicated block 161.

Once the user-space holds and/or runs a mixed-criticality setup regarding systematic capability of applications, the supervision within the supervisor component 150 may be extended. Based on an identifier, it can be recognized whether an application is safety-related or not. System calls invoked from within a non-safety-related application may be supervised as such, as those shall not corrupt the operational behavior or data from safety-related applications 130. The supervisor component 150 may identify the origin (also referred to as source) of a system call and based thereon can also mitigate uncontrolled access to neighboring applications.

The various software components described herein can be executed in different execution levels, respectively processor privilege levels, as exemplary summarized in below table for ARM-based processors. Similar concepts can be utilized for x86-based processors. Below table shows the execution level, and an exemplary virtualization level without listing all possible variations throughout all execution states of the software.

| Exception level (e.g., specific to ARM processors) | Virtualization level of memory addresses | software components |
|---|---|---|
| EL0 | Virtual addresses | safety-critical application 130, C-Library 126b |
| EL1 | Intermediate physical addresses | Supervisor component 150 for supervising the kernel 125, 125a |
| | Virtual addresses | |
| EL2 | Physical addresses | Hypervisor 115 |
| EL3 | Physical addresses | e.g., arm trusted firmware (part of bootloader). |

Even so the execution levels mentioned in above table may be specific to the underlying hardware or processor architecture, other architectures can be used, particularly, because the memory address abstraction shown in above table is not specific to the processor architecture. Also, memory abstraction may be considered as primary criteria and underlying virtualization mechanism where the present disclosure can be based on.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A method for executing a safety-critical application (130) on a hardware platform (100) comprising at least one processor core (112a, 112b), the method comprising the steps of:
• executing, on the hardware platform (100), a hypervisor (115);
• instantiating, by the hypervisor (115), an execution environment (120);
• executing, in the execution environment (120), an operating system having a kernel (125, 125a);
• executing, in the execution environment (120), on the operating system, the safety-critical application (130) on a privilege level that is lower than that of the kernel (125, 125a);
• executing, by the safety-critical application (130), a system call instruction of the kernel (125, 125a) that diverts the control flow to a first-level handler (127) in the kernel (125, 125a) with the goal of invoking, by a particular intended system call, a functionality provided by the kernel (125, 125a);
• further diverting, by the at least one processor core (112a, 112b), the control flow to a second-level handler (119) in the hypervisor (115);
• passing, by the second-level handler (119), the intended system call to a supervisor component (150);
• checking, by the supervisor component (150), operations to be performed by the intended system call against a predetermined ruleset; and
• based on the outcome of this checking, causing, by the supervisor component (150), execution of the functionality as per the intended system call, or suppressing such execution.

2. The method of claim 1, wherein the further diverting of the control flow to a second-level handler (119) in the hypervisor (115) comprises configuring the at least one processor core (112a, 112b) to: upon an attempt to execute the first-level handler (127) in the kernel (125, 125a), divert the control flow to the second-level handler (119) in the hypervisor (115).

3. The method of any one of claims 1 to 2, further comprising:
• marking, in a memory management of the hardware platform (100), a memory area in which the first-level handler (127) is stored as not executable; and
• designating the second-level handler (119) in the hypervisor (115) as an exception handler for a memory exception triggered by an attempt to execute code in said memory area.

4. The method of any one of claims 1 to 3, wherein a predetermined set of whitelisted system calls is exempted from the diverting of the control flow to the second handler in the hypervisor (115), thereby causing their intended functionality to be directly executed upon the system call from the safety-critical application (130).

5. The method of claims 3 and 4, wherein the first-level handler (127) for a whitelisted system call is fully outside the memory area that is marked as not executable.

6. The method of any one of claims 4 to 5, wherein the whitelisted system call invokes functionality that
• does not change the process state of the safety-critical application (130) and
• either does not access memory areas used exclusively by the safety-critical application (130) or only reads from these memory areas.

7. The method of any one of claims 1 to 6, further comprising: designating a memory area for common use by the safety-critical application (130) on the one hand and the kernel (125, 125a) on the other hand.

8. The method of any one of claims 1 to 7, wherein the predetermined ruleset comprises at least one rule allowing a system call to write to a designated memory area and/or register, and/or at least one rule forbidding the system call to write to a designated memory area and/or register.

9. The method of any one of claims 1 to 8, further comprising: checking, by the supervisor component (150), after executing the functionality as per the intended system call, whether modifications performed by this functionality are in agreement with the predetermined ruleset, and in response to determining that this is not the case, determining that the safety-critical application (130) is not working properly.

10. The method of any one of claims 1 to 9, wherein the further diverting of the control flow to a second-level handler (119) in the hypervisor (115) comprises performing, by the first-level handler (127) in the kernel (125, 125a), a hypervisor call, HVC.

11. The method of any one of claims 1 to 10, wherein the causing execution of the functionality as per the intended system call comprises handing over the control flow to a handler for the intended system call in the kernel (125, 125a).

12. The method of claim 11, further comprising:
• granting, by the hypervisor (115), to the supervisor component (150), write access to at least one memory area used by the safety-critical application (130); and
• writing, by the supervisor component (150), a result of the intended system call into this at least one memory area.

13. The method of any one of claims 1 to 12, further comprising: in response to determining that the functionality as per the intended system call affects a state of the process that is stored in the supervisor component (150),
• storing, before execution of the intended system call, this state of the process; and
• checking, after execution of the intended system call, an updated state of the process against the stored state.

14. The method of any one of claims 1 to 13, wherein at least one rule in the predetermined ruleset is based at least in part on whether a system call is invoked from the safety-critical application (130) or from another application running in the same execution environment.

15. The method of any one of claims 1 to 14, further comprising:
• processing, by the safety-critical application (130), measurement data acquired by at least one sensor into an actuation signal; and
• actuating at least one land, air, or sea vehicle, and/or at least one robot, and/or any component thereof, with the actuation signal.

16. A computing system (500), comprising:
A hardware platform (100) with one or more processor cores (112a, 112b); and
a memory (114) for data storage;
wherein the computing system (500) is configured to perform steps of the method according to any one of the preceding claims.

17. One or more computer programs, comprising machine-readable instructions that, when executed by a computing system, cause the computing system to perform the method of any one of claims 1 to 15, and/or to perform the role of the supervisor component in the context of this method.

18. A non-transitory machine-readable data carrier and/or a download product with the one or more computer programs of claim 17.
